(19) Europäisches Patentamt

European Patent Office

Office européen des brevets

(11) **EP 0 922 720 B1**

(12) **EUROPÄISCHE PATENTSCHRIFT**

(45) Veröffentlichungstag und Bekanntmachung des Hinweises auf die Patenterteilung:
**11.07.2001 Patentblatt 2001/28**

(51) Int Cl.$^7$: **C08G 18/70**, C08G 18/80, C08G 18/62, C09J 175/04

(21) Anmeldenummer: **97810969.2**

(22) Anmeldetag: **11.12.1997**

(54) **Verfahren zur Herstellung und Verwendung von lagerstabilen latentreaktiven Schichten oder Pulvern aus oberflächendesaktivierten festen Polyisocyanaten und Dispersionspolymeren mit funktionellen Gruppen**

Preparation process and use of storage-stable latent reactive layers or powders from surface-deactivated solid polyisocyanates and dispersion polymers showing functional groups

Procédé de préparation et utilisation de couches ou poudres stables au stockage ayant une réactivité latente à partir de polyisocyanates solides déactivés à la surface et polymères en dispersion fonctionnalisés

(84) Benannte Vertragsstaaten:
**AT BE CH DE DK ES FI FR GB GR IE IT LI LU MC NL PT SE**

(43) Veröffentlichungstag der Anmeldung:
**16.06.1999 Patentblatt 1999/24**

(60) Teilanmeldung:
**00109963.9 / 1 029 879**

(73) Patentinhaber: **Abend, Thomas**
**CH-9010 St. Gallen (CH)**

(72) Erfinder: **Abend, Thomas**
**CH-9010 St. Gallen (CH)**

(74) Vertreter: **Hepp, Dieter et al**
**Hepp, Wenger & Ryffel AG,**
**Friedtalweg 5**
**9500 Wil (CH)**

(56) Entgegenhaltungen:
**EP-A- 0 131 903         EP-A- 0 417 540**
**WO-A-99/01493         DE-A- 4 022 602**
**US-A- 4 888 124**

• R. BLUM UND H. SCHUPP: "ONE-COMPONENT POLYURETHANE SYSTEMS BY DEACTIVATION OF DISPERSED SOLID ISOCYANATES", PROGRESS IN ORGANIC COATING, , 1990, Band , Nr. , Seiten 275 - 288

**Beschreibung**

Die Erfindung betrifft Verfahren zur Herstellung und die Verwendung lagerstabiler, latent-reaktiver Schichten und Pulvern aus im wesentlichen wässrigen Dispersionen, Suspensionen oder Lösungen, die nur on der Oberfläche desaktivierte Polyisocyanate (nachstlernd oberflâchendesaktivierte Polyisocyanate gennant) und isocyanatreaktive Polymere enthalten.

JP 09 188,735 beschreibt ein bei Raumtemperatur lagerstabiles Gemisch aus dispergierten funktionellen Polymeren mit einem Polyisocyanat. Eine Vordispersion bestehend aus Polyisocyanat, polymerem Stabilisator und einer hydrophoben Flüssigkeit (als Dispersionsmittel) wird in einer weiteren wässerigen Lösung oder Dispersion eines isocyanatreaktiven Polymeren unter Zuhilfenahme eines o/w Emulgators und Schutzkolloids emulgiert. Nach der Applikation und dem Verdunsten des Wassers reagiert das Polyisocyanat spontan unter Vernetzung mit den funktionellen Gruppen des Polymeren.

In DE 31 12 054, DE 32 28 723 und DE 32 28 724 werden pulverförmige, feinteilige feste Polyisocyanate mit Teilchendurchmessern bis 150 um oberflächlich desaktiviert. Durch die Oberflächenbeschichtung behalten die Polyisocyanate ihren Isocyanatgehalt und ihre Reaktivität und bilden ein stabiles Einkomponentensystem auch in Wasser oder wässerigen Lösungsmitteln.

Im DE 32 28 724 und DE 32 30 757 werden oberflächendesaktivierte pulverförmige Diisocyanate mit Polyolen und wässerigen Dispersionspolymeren, die funktionelle Gruppen enthalten zu einer lagerstabilen reaktiven Paste kombiniert. Durch Aufheizen dieser wasserhaltigen Paste auf 140°C, d.h. über die Reaktionstemperatur des Polyisocyanates vernetzen diese beiden Komponenten und es wird ein leicht angeschäumter elastischer Belag erhalten.

Ein Verfahren zur Herstellung stabiler Dispersionen feinteiliger oberflächendesaktivierten Isocyanate wird in DE 35 17 333 beschrieben. Die resultierenden stabilen Dispersionen eignen sich als Vernetzungsmittel.

Eine Verwendung der wässerigen Dispersionen von oberflächendesaktivierten festen, feinteiligen Polyisocyanaten als Vernetzer in Textilpigmentdruckpasten und Färbeflotten wird in DE 35 29 530 dargelegt. Im Anschluss an den Applikationsvorgang werden die Textilpigmentdruckpasten und Färbeflotten mit Heissluft oder Dampf auf dem Gewebe fixiert.

Nachteil dieser in diesen Dokumenten beschriebenen Systeme ist jedoch, dass die Arbeitsschritte Applikation und Aushärten bzw. Vernetzen nicht getrennt werden können, was sowohl aus ökonomischen wie logistischen Gründen bei einer Vielzahl von Anwendungen wünschenswert erscheint.

So würde ein Substrat, das eine lagerstabile latent-reaktive Schicht oder Pulver trägt die Möglichkeit eröffnen, an dem Ort aufgetragen zu werden, an dem die entsprechenden Gerätschaften vorhanden sind, eine vorbestimmbare Zeitspanne gelagert zu werden und anschliessend zu dem Ort transportiert zu werden, an dem die Verarbeitung zu weiteren Zwischenprodukten oder zum Endprodukt erfolgt.

Lagerstabile, latent-reaktive Massen oder Schichten werden in WO 93/25599 beschrieben. Diese bestehen aus isocyanatfunktionellen Polymeren, die einen Schmelzpunkt über 40°C aufweisen und oberflächendesaktivierten Polyisocyanaten. Zur Herstellung des Gemisches werden die Komponenten auf Temperaturen aufgeschmolzen, die wesentlich über dem Erweichungspunkt des Polymeren liegen. Der apparative Aufwand für die Herstellung und die Applikation dieser Massen sind neben den Energiekosten erheblich. Zudem können in diesem Systemen aus Stabilitäts- und Verarbeitungsgründen nur oberflächendesaktivierte Polyisocyanate verwendet werden, die eine Vernetzungstemperatur von über 80 °C aufweisen. Weiterhin ist eine gezielte und kontrollierte inhomogene Vermischung der Komponenten Gegenstand der Anmeldung. Diese erfordert jedoch aufwendige Arbeitsschritte.

"Lagerstabile Dispersionen sind auch aus DE-A-4022602 und US-A-4,888,124 bekannt. Durch Trocknen der aufgetragenen Dispersion bei Prozesstemperaturen über 100°C wird die Dispersion vernetzt."

Aufgabe der vorliegenden Erfindung ist es lagerstabile, latent-reaktive, weitgehend trockene Schichten oder Pulver herzustellen, bei dem auch desaktivierte Polyisocyanate mit Reaktionstemperaturen unter 80°C einsetzbar sind, die sich unter Umweltschutzgesichtspunkten vorteilhaft verhalten und zusätzlich kostengünstig produziert werden können.

Erfindungsgemäss wird dies durch durch die Kennzeichen der unabhängigen Ansprüche gelöst.

Lagerstabile, latent-reaktive Schichten oder Pulver können demnach hergestellt werden durch die Verwendung einer im wesentlichen wässrigen Dispersion, die wenigstens ein oberflächendesaktiviertes Polyisocyanat und wenigstens ein dispergiertes oder gelöstes mit Isocyanat reaktives Polymer enthält.

Weiterhin ist ein Verfahren zur Herstellung lagerstabiler, latent-reaktiver Schichten oder Pulvern Gegenstand der Erfindung, bei dem

a.) eine im wesentlichen wässerige Dispersion oder Lösung aus wenigstens einem gegenüber Isocyanaten reaktiven Polymer und

b.) wenigstens ein im wesentlichen in Wasser suspendiertes oberflächendesaktiviertes, festes, feinteiliges Polyisocyanat gemischt werden,

c.) diese Mischung wahlweise auf ein Substrat in einer vorbestimmbaren Schichtstärke aufgetragen wird und

d.) das Wasser des Gemisches unterhalb der Reaktionstemperatur des Isocyanates entfernt wird,

so dass die dadurch erhaltenen im wesentlichen trockenen und wasserfreien Schichten oder Massen bei Reaktionstemperaturen unterhalb der Reaktionstemperatur von Polyisocyanat und Polymer lagerstabil und latent-reaktiv sind.

Überaschenderweise wurde gefunden, dass das Entfernen des Wassers und Trocknen des Gemisches im Temperaturbereich wahlweise bei

i) Raumtemperatur bis Erweichungstemperatur des funktionellen Polymeren oder

ii) oberhalb der Erweichungstemperatur des Polymern

erfolgen kann, solange die Reaktionstemperatur des oberflächendesaktivierten Polyisocyanates in keinem der beiden Fälle überschritten wird. Unabhängig davon, ob das Trocknen nach i) oder ii) erfolgt, sind die oberflächendesaktivierten festen, feinteiligen Polyisocyanate nach der Trocknung unverändert und unreagiert in dem weitgehend wasserfreien Polymer bzw. in der im wesentlichen wasserfreien Schicht oder Pulver verteilt und eingebettet. Die Dispersion, Suspension oder Lösung von Polymer und suspendiertem desaktivierten Isocyanat geht in eine kontinuierliche Phase von unvernetztem Polymer über, in dem die unreagierten oberflächendesaktivierten, feinteiligen Isocyanate suspendiert sind.

Im Falle i) resultiert ein wasserfreier, trockener, latent-reaktiver Film oder ein latent-reaktives Pulver, welche bei Raumtemperatur oder bei leicht erhöhter Temperatur lagerfähig ist. Die Reaktionsfähigkeit der oberflächendesaktivierten Isocyanate mit den funktionellen Gruppen des Polymern wird erhalten.

Im Falle ii) resultiert nach dem Verdampfen des Wassers ein geschmolzenes System. Als Beispiel dient das Verkleben eines Laminates aus Folien. Auch in dieser Phase sind die oberflächendesaktivierten Isocyanate unverändert und behalten ihre Reaktivität. Die Verklebung basiert zunächst auf den thermoplastischen Eigenschaften des Polymers.

In beiden Fällen vernetzt das System und es wird unschmelzbar und unlöslich erst bei Überschreiten der Reaktionstemperatur des oberflächendesaktivierten Isocyanats. Dies erfolgt nach einer vorbestimmbaren Zeitspanne.

In gewissen Fällen genügt ein kurzfristiges Überschreiten der Reaktionstemperatur, um die Vernetzungsreaktion auszulösen. Die Reaktions- oder Aufdicktemperaturen der desaktivierten Polyisocyanate sollten dabei Temperaturen im Bereich von 30°C bis 180°C aufweisen, bevorzugt im Bereich zwischen 40°C und 150°C liegen.

Aufdickung- oder Reaktionstemperatur bezeichnet die Temperatur, bei der sich die oberflächendesaktivierende Schicht des Isocyanats im Polymer löst oder auf andere Weise zerstört wird. Das Polyisocyanat wird freigesetzt und im Polymer gelöst. Die Endaushärtung erfolgt durch Diffusion und Reaktion des Polyisocyanates mit den funktionellen Gruppen des Polymeren unter Viskositätsanstieg und Vernetzung. Die Aufdickungs- und Reaktionstemperatur liegt je nach Art des oberflächendesaktivierten Polyisocyanates ober- oder unterhalb der Erweichungstemperatur des Polymeren.

Die Stabilität des unreagierten Systems, die Reaktionstemperatur und der Reaktionsverlauf werden bestimmt durch die Art des Polyisocyanats, durch Art und Menge des Oberflächenstabilisators, durch den Löslichkeitsparameter des funktionellen Polymers sowie durch Katalysatoren, Weichmacher und andere Hilfsmittel. Diese werden weitgehend in den eingangs erwähnten Schutzrechte beschrieben.

Weiterhin sind der Applikation nachfolgende Bearbeitungsschritte des die Schicht oder das Pulver tragenden Substrates Gegenstand der Erfindung. Diese umfassen Schritte, wie sie z.B. bei der Bearbeitung des Substrates in seine endgültige Form durch Stanzen, Zuschneiden, Biegen, Falzen, Laminieren, etc.notwendig sind. Dabei wurde weiterhin unerwarteterweise festgestellt, dass der erfindungsgemässe Film oder Pulver in ihrem plastischen Zustand verarbeiten werden kann. Selbst nach Tagen oder Monaten kann die Schicht oder das Pulver auf Temperaturen oberhalb der Erweichungstemperatur des Polymern erhitzt werden, ohne dass Reaktion zwischen den funktionellen Gruppen des Polymern und den oberflächendesaktivierten Isocyanaten eintritt. Die Verarbeitung im plastischen Zustand kann dabei sogar unter mehrmaligem Erwärmen und Kühlen erfolgen.

In einer bevorzugten Ausführungsform sind die Filme oder Pulver lagerstabile, latent-reaktive Klebstoffsysteme.

Als Polyisocyanate für das erfindungsgemässe Verfahren sind alle Di- oder Polyisocyanate oder deren Gemische geeignet, sofern sie einen Schmelzpunkt oberhalb 40 °C aufweisen und sich durch bekannte Methoden in Pulverform mit Teilchengrössen unter 200 μm überführen lassen. Es können aliphatische, cycloaliphatische, heterocyclische oder aromatische Polyisocyanate sein. Als Beispiele seien genannt: Diphenylmethan-4,4'-diisocyanat (MDI), Naphthalin-1,5-diisocyanat (NDI), 3,3'-Dimethyl-biphenyl-4,4'-diisocyanat (TODI), dimeres 1-Methyl-2,4-phenylen-diisocyanat (TDI-U), 3,3'-Diisocyanato-4,4'-dimethyl-N,N'-diphenylharnstoff (TDIH), Additionsprodukt von 2 Mol 1-Methyl-2,4-phenylen-diisocyanat mit 1 Mol 1,2-Ethandiol, 1,4-Butandiol, 1,4-Cyclohexan-di-methanol, oder Ethanolamin, das Isocyanurat des IPDI (IPDI-T).

Die genannten Additionsprodukte zeigen nicht nur als wässrige Dispersionen die erfindungsgemässen Vorteile. Additionsprodukte aus 1-Methyl-2,4-phenylen-diisocyanat und 1,4 Butandiol oder 1,2 Ethandiol besitzten auch in festen und flüssigen lösungsmittelhaltigen oder lösungsmittelfreien Systemen sehr vorteilhafte Eigenschaften. Diese zeigen sich vor allem hinsichtlich ihrer niedrigen Aushärtungs- bzw. Vernetzungstemperatur, die im Temperaturbereich unter 90°C liegt. Damit ist die Verwendung dieser Mischung ob nun weitgehend auf Wasser- oder Polyolbasis sehr vorteilhaft für Beschichtungen und Verklebungen temperaturempfindlicher Substrate.

Die Oberflächenstabilisierungsreaktion kann auf verschiedenen Wegen durchgeführt werden:

- Durch Dispersion des pulverförmigen Isocyanats in einer Lösung des Desaktivierungsmittels.
- Durch Eintragen einer Schmelze eines niederschmelzenden Polyisocyanats in eine Lösung des Desaktivierungsmittels in einem nichtlösenden flüssigen Dispersionsmittel.
- Durch Zugabe des Desaktivierungsmittels oder einer Lösung desselben, zur Dispersion der festen feinteiligen Isocyanate.
  Die Konzentration des Desaktivierungsmittels soll 0.1 bis 25, bevorzugt 0.5 bis 8 Equivalentprozent betragen, bezogen auf die total vorhandenen Isocyanatgruppen.

Oft muss für den erfindungsgemässen Einsatz die Teilchengrösse der pulverförmigen Polyisocyanate, durch eine der Synthese nachgeschaltete Feindispergierung oder Nassmahlung auf eine Teilchengrösse im Bereich von 0.5 bis 20 μ gebracht werden. Hierfür eignen sich Dissolver, Dispergiergeräte von Rotor-Stator Typ, Rührwerkskugelmühlen, Perl- und Sandmühlen, Kugelmühlen und Reibspaltmühlen, bei Temperaturen unter 40 °C. Je nach Polyisocyanat und Verwendung erfolgt die Vermahlung am desaktivierten Polyisocyanat, in Gegenwart des Desaktivierungsmittels, im nichtreaktiven Dispergiermittel oder Wasser mit nachfolgender Desaktivierung. Das gemahlene und oberflächenstabilisierte Polyisocyanat lässt sich auch aus den Mahl-Dispersionen abtrennen und trocknen.

Um die Oberflächendesaktivierung und die Vernetzungsreaktion zu steuern, können auch Katalysatoren zugegeben werden. Bevorzugt sind solche Katalysatoren, welche in wässeriger Lösung oder Dispersion hydrolysenstabil sind und später dann auch die wärmeaktivierte Reaktion beschleunigen. Beispiele für Urethankatalysatoren sind organische Zinn-, Eisen-, Blei-, Kobalt-, Wismuth-, Antimon-, Zink-Verbindungen oder ihre Mischungen. Alkylmercaptidverbindungen des Dibutylzinns werden auf Grund der höheren Hydrolysenstabilität bevorzugt. Tertiäre Amine wie Dimethylbenzylamin, Diazabicyclo-undecen, sowie nichtflüchtige Polyurethanschaumkatalysatoren auf tertiärer Aminbasis können für spezielle Zwecke oder in Kombination mit Metallkatalysatoren verwendet werden, die katalytische Aktivität kann aber durch Umsetzung mit dem Kohlendioxyd der Luft beeinträchtigt werden.

Die Konzentration der Katalysatoren liegt im Bereich von 0.001 bis 3 %, bevorzugt 0.01%-1% bezogen auf das reaktive System.

Als erfindungsgemässe Reaktionspartner der Polyisocyanate kommen wasserlösliche oder wasserdispergierbare Emulsions- oder Dispersionspolymere in Frage, welche isocyanatreaktive funktionelle Gruppen tragen. Diese werden dem Stand der Technik entsprechend durch Polymerisation von olefinisch ungesättigten Monomeren in Lösung, Emulsion oder Suspension hergestellt. Die filmbildenden Polymerisate enthalten 0.2 bis 15 %, bevorzugt 1 bis 8 % einpolymerisierte Monomere mit isocyanatreaktiven Gruppen, wie Hydroxyl-, Amino-, Carboxyl-, Carbonamid-gruppen. Beispiele von solchen funktionellen Monomeren sind: Allylalkohol, Hydroxyethyl- oder Hydroxypropyl-acrylat und -methacrylat, Butandiol-monoacrylat, ethoxylierte- oder propoxylierte Acrylate oder Methacrylate, N-Methylol-acrylamid, tert. Butylamino-ethyl-methacrylat, Acryl- und Methacrylsäure, Maleinsäure, Maleinsäure-monoester. Auch Glycidylmethacrylat und Allylglycidylether können copolymerisiert werden. Diese enthalten eine Epoxygruppe, die in einem weiteren Schritt mit Aminen oder Aminalkoholen zum sekundären Amin derivatisiert wird, beispielsweise mit Ethylamin, Ethylhexylamin, Isononylamin, Anilin, Toluidin, Xylidin, Benzylamin, Ethanolamin, 3-Amino-1-propanol, 1-Amino-2-propanol, 5-Amino-1-pentanol, 6-Amino-1-hexanol, 2-(2-Aminoethoxy)ethanol. Diese Umsetzung erhöht die Reaktivität der funktionellen Gruppen des Polymeren gegenüber den Isocyanatgruppen, zu Lasten der Nebenreaktion mit Wasser.

Geeignet sind auch wasserlösliche hydroxyfunktionelle Bindemittel wie Polyvinylalkohol, teilverseiftes Polyvinylacetat, Hydroxyethylcellulose, Hydroxypropylcellulose, sowie wasserdispergierbare hydroxyfunktionelle Polyester, hydroxyfunktionelle Sulfopolyester, und Polyurethandispersionen, Dispersionen von Polyamidoaminen, welche Carboxyl-, Hydroxyl-primäre oder sekundäre Aminogruppen tragen.

Ebenso können wässerige kolloidale Dispersionen oder kolloidale Lösungen mit Teilchengrössen zwischen 1 - 100 nm in Kolloidmühlen hergestellt werden, ausgehend von thermoplastischen Polymeren mit isocyanatreaktiven Gruppen. Beispiel sind höhermolekulare feste Epoxyharze, Poly-ethylen-vinylalkohol und Poly-ethylen-co-acrylsäure.

Das Verhältnis zwischen den Isocyanatgruppen in den oberflächenstabilisierten feinteiligen Polyisocyanaten und der Summe der Hydroxyl- und Aminogruppen der Polymeren im weitgehend wasserfreiem und festem Zustand soll im Bereich 0.1 bis 1.5 betragen.

In die resultierende hochviskose Paste oder niederviskose Mischung können weitere inerte oder funktionelle Zusätze eingemischt oder dispergiert werden. Zu den funktionellen Zusätzen gehören hydroxy- oder aminofunktionelle pulverförmige oder flüssige nieder- bis hochmolekulare Verbindungen, welche mit den festen Polyisocyanaten oberhalb der Reaktionstemperatur reagieren können. Die stöchiometrischen Verhältnisse sind entsprechend anzupassen. Als niedermolekulare Verbindungen werden Verbindungen mit Molekulargewichten zwischen 40 und 500 g/mol verstanden, unter hochmolekularen Verbindungen solche, deren Molekulargewichte zwischen 500 und 10000 g/mol liegen. Als Beispiele können angeführt werden: Niedermolekulare bis hochmolekulare flüssige Polyole oder/und Polyamine, feste polyfunktionelle Polyole oder/und aromatische Polyamine. Beispiele sind Triethanolamin, Butandiol, Trimethylolpropan, ethoxyliertes Bisphenol A, endständig ethoxylierte Polypropylenglykole, 3,5-Diethyl-toluylen-2,4- und 2-6-diamin, Polytetramethylenoxid-di-(p-aminobenzoat), Tris-hydroxyethyl-isocyanurat, Hydrochinon-bis-hydroxyethylether, Pentaerythrit, 4,4'-Diamino-benzanilid, 4,4'-Methylen-bis-(2,6-diethylanilin).

Zu den inerten Zusätzen gehören beispielsweise Netzmittel, organische oder anorganische Verdickungsmittel, Weichmacher, Füllstoffe, Kunststoffpulver, Pigmente, Farbstoffe, Lichtstabilisatoren, Alterungsstabilisatoren, Korrosionsschutzmittel, Flammschutzmittel, Treibmittel, Haftharze, organofunktionelle Silane, kurzgeschnittene Fasern und gegebenenfalls geringe Mengen von inerten Lösungsmitteln.

Die Vorteile der vorliegenden Erfindung liegen in der Trennung von Applikation der wässrigen Dispersion von der Vernetzungsreaktion d.h. der endgültigen Aushärtung. Damit können z.B. an einem Ort Klebstofffilme auf Holz, Glas oder anderweitige Substrate oder Unterlage aufgetragen werden, diese vorgefertigten Fabrikate gelagert und/oder verschickt werden und an einem anderen Ort zum Endprodukt ausgehärtet werden.

Ein weiterer Vorteil des erfindungsgemässen Verfahrens und der Verwendung der entsprechenden Produkte liegen in der Verwendung von Wasser als Dispersionsmedium . Der Energieverbrauch zur Herstellung der Dispersionen ist gering. Der Anteil organischer Lösungsmittel minimal, was in einer aus Umweltschutzgesichtspunkten sehr vorteilhaften Verarbeitung resultiert.

Wenn von einer wässerigen Polymerdispersion ausgegangen wird, liegt ein weiterer Vorteil darin, dass auch oberflächendesaktivierte Polyisocyanate mit einem Schmelzpunkt im Bereich 40 bis 150 °C ohne Probleme eingearbeitet werden können. Die Vernetzungstemperaturen können im Bereich von 35 °C bis 90 °C liegen. Mit diesen niedrigen Vernetzungstemperaturen können auch temperaturempfindliche Substrate mit diesem Einkomponentensystem durch Wärmeeinwirkung verklebt werden.

Die aus der wässrigen Suspension, Dispersion oder Lösung erhaltene Schicht oder Pulver lässt sich monatelang lagern. Je nach den Lösungseigenschaften des festen Films für das Polyisocyanat ist die Lagerdauer bei Raumtemperatur oder leicht erhöhten Temperaturen jedoch unterschiedlich. Die Lagerdauer des erfindungsgemässen Systems im wasserfreien und unvernetzten Zustand ist wenigstens das 3-fache, üblicherweise mehr als das 10-fache der gleichen Mischung mit den gleichen Polyisocyanaten, welche nicht oberflächen-desaktiviert sind. Bei +2°C sind die erfindungsgemässen Schichten oder Pulver mindestens sechs Monate lagerstabil, bei Raumtemperatur jedoch mindestens 1 Monat lagerstabil und erfindungsgemäss verarbeitungsfähig. Der Begriff latent-reaktiv bezeichnet den Zustand der im wesentlichen wasserfreien Schicht oder Pulvers in der das oberflächendesaktivierte Polyisocyanat und das mit Isocyanaten reaktive Polymer im wesentlich unvernetzten Zustand vorliegen.

Die Wärmezuführ für die thermoplastische Verarbeitung sowie die Vernetzung kann vorzugsweise mit Konvektions- oder Strahlungswärme erfolgen. Die lagerstabile wässerige Suspension, Dispersion oder Lösung aus oberflächendesaktivierten feinteiligen Polyisocyanaten und dispergierten oder wasserlöslichen Polymeren mit isocyanatreaktiven Gruppen kann auf die Oberfläche des zu verklebenden oder zu beschichtenden Substrates appliziert werden, insbesondere durch Pinseln, Sprühen, Spritzen, Rakeln, Spachteln, Giessen, Tauchen, Extrudieren oder durch Walzauftrag oder im Druckverfahren aufgetragen werden.

Im Falle der Verklebung von Substraten kann man wahlweise wie folgt vorgehen:

1. Pressverklebung durch Fügen der Haftflächen bei Raumtemperatur und Erhöhen der Temperatur bis über die Erweichungstemperatur des Polymeren, aber unter der Reaktionstemperatur, dann Abkühlen auf Raumtemperatur. Es entsteht ein Verbund, der latent reaktiv ist. Dieser Verbund kann weiterbearbeitet und geformt werden, auch im platischen bzw. thermoplastischen Bereich des Polymers. Den endgültigen vernetzten Zustand erhält die Verklebung, wenn die Temperatur bis über die Aufdickungs- oder Reaktionstemperatur erhöht wird.

2. Pressverklebung durch Fügen der Haftflächen bei Raumtemperatur und Erhöhen der Temperatur bis über die Erweichungstemperatur des Polymeren, Ausbilden eines homogenen Klebstofffilms, der die Gegenfläche benetzt und haftet, Erhöhen der Temperatur bis über die Aufdickungs- oder Reaktionstemperatur und endgültige Vernetzung.

3. Die beschichtete Haftfläche wird durch Erhöhen der Temperatur bis über die Erweichungstemperatur des Polymeren in den thermoplastischen Zustand gebracht, mit einem zweiten Substrat gefügt und unter Pressung die Temperatur bis über die Aufdickungs- oder Reaktionstemperatur erhöht. Gegebenenfalls können im thermoplastischen Zustand des System weitere Verarbeitungsschritte durchgeführt werden.

In einer zweiten Ausführungsform des Verfahrens wird die lagerstabile wässerige Dispersion von oberflächendesaktivierten feinteiligen Polyisocyanaten und dispergierten oder wasserlöslichen Polymeren mit isocyanatreaktiven Gruppen in die Form eines latent-reaktiven Klebefilms, Klebebandes, Klebevlieses oder -gewebes gebracht, der beidseitig Haftung aufbauen kann. Zur Herstellung von trägerfreien Formen, wie Filmen oder Bändern, wird die erfindungsgemässe Dispersion auf ein nichthaftendes Trägerband oder Trennpapier appliziert und das Wasser bei Raumtemperatur oder bei Temperaturen bis zur Erweichungstemperatur des Polymers verflüchtigt. Der Klebstofffilm kann nach Abkühlen vom Träger gelöst werden und bis zur Verwendung trägerfrei gelagert werden. Alternativ kann der Klebstofffilm mit dem Trägerpapier zusammen gelagert werden.

Im Falle der Klebvliese oder -gewebe wird die reaktionsfähige Dispersion durch Sprühen, Spritzen, Rakeln, Giessen, Tauchen, Foulardieren, durch Walzauftrag oder im Druckverfahren appliziert, das Wasser bei Raumtemperatur oder bei Temperaturen bis zur Erweichungstemperatur des Polymers verflüchtigt, und das Klebevlies oder -gewebe, versehen oder imprägniert mit der latent wärmereaktiven Klebeschicht, bis zur Verwendung gelagert.

Die trägerfreien Klebefilme, Klebebänder, Klebvliese oder -gewebe dienen als Klebeschicht zwischen Substraten. Es ist auch möglich, Klebefilme, -vliese oder -gewebe einseitig auf eine Substratfläche im plastischen Zustand aufzubringen oder zu sintern. Dieses Laminat kann bis zur endgültigen Verklebung mit einer zweiten Substratoberfläche bei Raumtemperatur gelagert werden.

In einer dritten Ausführungsform des Verfahrens wird die lagerstabile wässerige Dispersion von oberflächendesaktivierten feinteiligen Polyisocyanaten und dispergierten oder wasserlöslichen Polymeren mit isocyanatreaktiven Gruppen in die Form eines latentreaktiven Pulvers gebracht. Diese Pulver können als latentreaktive Klebestoffe oder zu Beschichtungszwecken, wie Pulverlacke, verwendet werden.

Zur Herstellung von Pulvern aus den erfindungsgemässen Dispersionen können diese in einem Sprühturm versprüht werden. Die Temperatur der von unten eingeleiteten Luft soll unter der Erweichungstemperatur des Polymers und der Reaktionstemperatur des oberflächenblockierten Polyisocyanats bleiben.

Alternativ können die erfindungsgemässen Dispersionen auf die nicht haftende Oberfläche eines umlaufenden Bandes mit dehäsiven Oberflächen gesprüht oder mit einem Druckverfahren appliziert werden. Nach dem Verflüchtigen des Wassers werden die trockenen Partikel vom Band abgeschabt, gegebenenfalls gesiebt und klassiert, und bis zur Verwendung gelagert. Latent reaktive Pulver können auch aus trägerfreien Filmen oder Bändern durch Mahlprozesse, gegebenenfalls bei tiefen Temperaturen, hergestellt werden. Sie dienen als wärmereaktive vernetzbare Klebe- oder als Beschichtungspulver. Applikationsgeräte und -methoden sind Stand der Technik und dem Fachmann bekannt.

Die mit dem erfindungsgemässen Verfahren hergestellten latentreaktiven vorgefertigten Schichten dienen vorzugsweise als thermisch belastbare Klebeverbindung für flexible oder feste Substrate wie z.B. Metallen, Kunststoffen, Glas, Holz, Holzverbundstoffe, Karton, Folien, synthetischen Flächengebilden, Textilien,.

Die erfindungsgemäss hergestellten reaktiven Beschichtungspulver lassen sich auch mit den Applikationsmethoden für Pulverlacke verarbeiten. Die Vernetzungstemperatur kann je nach Wahl des Polyisocyanats so niedrig sein, dass wärmeempfindliche Substrate, wie Kunststoffe, Textilien und Holz, ohne thermische Schädigung beschichtet werden können.

"Vorteilhaft kann das mit Isocyanat reaktive Polymer ein mit aliphatischen, cycloaliphatischen, aromatischen Monoaminen oder Aminoalkoholen modifiziertes Copolymerisat aus Glycidylmethacrylat oder Allylglycidylether mit olefinisch ungesättigten Monomeren sein.

Vorteilhaft ist es, wenn das mit Isocyanaten reaktive Polymer eine anionische oder kationische wässrige Dispersion aus Polyurethan oder Polyharnstoff ist, welches Carboxyl-, Hydroxyl-, primäre oder sekundäre Aminogruppen trägt.

Die Bearbeitung der latent reaktiven Schichten oder Pulver kann auch mehrmaliges Erwärmen auf Temperaturen oberhalb der Erweichungstemperatur des Polymer und unterhalb der Reaktionstemperatur des Polyisocyanats umfassen.

Die erfindungsgemäss hergestellten Pulver können z.B. durch Sprühtrocknen erhalten werden."

Das Verfahren erlaubt auch die Beschichtungspulver auf dem Substrat nur zu sintern oder zu einer geschlossenen Schicht zu schmelzen. Die vollständige Vernetzung erfolgt dann bei einer späteren Wärmebehandlung, gegebenenfalls nach einem zusätzlichen mechanischen oder thermischen Bearbeitungschritt.

**Beispiele**

A) Applikations- und Prüfverfahren, Lagerungen:

| | |
|---|---|
| Lagerung A | Dispersion bei Raumtemperatur applizieren, weitgehendes Entfernung des Wassers durch Verdunsten bei Raumtemperatur und/oder Einsickern in die Unterlage, nach max. 3 Stunden Klebeflächen fügen, minimal 7 Tage bei Normalbedingungen lagern, dann 0.5 Std. auf 120 °C erhitzen (Objekttemperatur), wobei die Vernetzungsreaktion ausgelöst wird. Abkühlen und 24 Std. bei Normalbedingungen lagern. |
| Lagerung B | Wie Lagerung A, aber ohne Wärmebehandlung. |
| Lagerung C | AufKlebefläche auftragen, weitgehendes Entfernung des Wassers durch Verdunsten bei Raumtemperatur und/oder Einsickern in die Unterlage. Die mit Klebstoffschicht versehene Fläche offen an der Luft für mindestens 30 Tage liegen lassen. Klebeflächen fügen und unter Klammerdruck während 0.5 Std. auf 120 °C erhitzen, wobei die Vernetzungsreaktion ausgelöst wird. Abkühlen und 24 Std. bei Normalbedingungen lagern. |
| Lagerung D | Flüssige Dispersion mit SDSI während 30 Tagen bei Raumtemperatur lagern, dann auf Klebefläche applizieren. Weiter wie bei Lagerung A oder C |
| Abkürzung SDSI: | Surface Deactivated Solid Isocyanate oder oberflächendesaktivierte festes Isocyanat |

Prüfung der Temperaturbeständigkeit oder Wärmestandfestigkeit der Verklebungen:

Prüflinge mit 100x20x5 mm$^3$ aus Buchenholz resp. 25x100xd mm$^3$ aus synthetischem Material wurden einfach überlappend press-verklebt, Ueberlappung 10 mm, Klebefläche 20x10 mm$^2$. Um bei der Heissverklebung die Nebenreaktionen von Wasser mit Isocyanaten möglichst auszuschalten, wurden die Holzprüflinge in einem Umluftofen unter Vakuum (Restdruck 0.1bar) während 0.5 Stunden auf 120°C erhitzt.

Für die Bestimmung der Temperaturfestigkeit nach Lagerungen A bis C wurden die Prüflinge senkrecht in den Umluftofen gehängt und mit 300 g belastet. Die Temperatur wurde alle 15 Minuten um 10 °C erhöht. Haftverlust der Klebeflächen führte zum Fallen der Gewichte. Obere Prüftemperatur begrenzt auf 150 °C.

Bestimmung der Wasserbeständigkeit: Prüflinge im Wasser bei Normaltemperatur während 4 Tagen lagern. Qualitative Beurteilung der Festigkeit im nassen Zustand.

| Es bedeuten | Hohe und praktische unveränderte Festigkeit der Verklebung | + |
|---|---|---|
| | Merklicher Abfall der Festigkeit | +/- |
| | Verlust der Festigkeit oder Auseinanderfallen der Verklebung | - |

Abweichende oder andere Prüfbedingungen oder Prüfungen sind jeweils angegeben.

B) Herstellung der wässerigen Suspension von festem oberflächendesaktivertem Polyisocyanat: Allgemeine Vorschrift

Unter dem Dissolver wurde die folgende Suspensionen von oberflächendesaktivierten Polyisocyanaten hergestellt:

| | Gewichtsteile |
|---|---|
| (1) Wasser | 106 |
| (2) Kelzan S, 3 %ige Lösung in Wasser (Monsanto) | 33 |
| (3) Polyoxyethylensorbitantrioleat 1 | |
| (4) Polyamin | 2 - 6 |
| (5) Polyisocyanat-Pulver, Partikelgrösse < 45 µm | 80 |

(fortgesetzt)

| | Gewichtsteile |
|---|---|
| | 222 - 226 |
| (4) Polyamine: Euretek 505 (Witco) Polyamidoamin Jeffamin T-403 (Huntsman) aminoterminiertes Polyoxypropylen | |

| Spezifische Beispiele | Gramm pro Equivalent | Gramm Einwaage | % Isocyanat gruppen desaktiviert |
|---|---|---|---|
| Beispiel 1 | | | |
| (1)(2)(3), Komponenten wie oben (4) Polyamidoamin Euretek 505, (5) IPDI-Isocyanurat (IPDI-T) Polyisocyanat IPDI-T 1890/100 Hüls | 144 243 | 2.3 80 | 5.0 |
| Beispiel 2 | | | |
| (1)(2)(3), Komponenten wie oben (4) Jeffamin T-403 (Huntsman) (5) 4,4-Diphenylmethandiisocyanat | 143 (MDI) 125 | 6 80 | 6.6 |
| Das oberflächendesaktivierte MDI wurde durch halbstündiges Mahlen dieser Suspension in einer gekühlten offenen Perlmühle (Glasperlen lmm, 2500 Umdrehungen pro Minute) auf Teilchengrössen unter 5μm zerkleinert. | | | |
| Beispiel 3 | | | |
| (1)(2)(3), Komponenten wie oben (4) Polyamidoamin Euretek 505 (5) 3,3'-Dimethyl-biphenyl-4,4'-diisocyanat (TODI) | 144 132 | 3.7 80 | 5.0 |
| Beispiel 4 | | | |
| (1)(2)(3), Komponenten wie oben (4) Polyamidoamin Euretek 505, oder Jeffamin 403 (5) Dimeres 1-Methyl-2,4-phenylen-diisocyanat (TDI-U) | 144 174 | 3.3 80 | 5.0 |
| Beispiel 5 | | | |
| (1)(2)(3), Komponenten wie oben (4) Polyamidoamin Euretek 505, (5) Urethan von 2 Mol 1-Methyl-2,4-phenylen und 1 Mol 1,2-Ethylenglykol (TDIxEG) | 144 205 | 3.3 80 | 5.8 |

(fortgesetzt)

| Spezifische Beispiele | Gramm pro Equivalent | Gramm Einwaage | % Isocyanat gruppen desaktiviert |
|---|---|---|---|
| Beispiel 5 | | | |
| | | | |
| Beispiel 6 | | | |
| (1)(2)(3), Komponenten wie oben<br>(4) Polyamidoamin Euretek 505,<br>(5) Urethan von 2 Mol 1-Methyl-2,4-phenylen und 1 Mol 1,4 Butandiol (TDIxBDO) | 144<br>219 | 3.3<br>80 | 6.3 |
| Vergleichsbeispiel 7 | | | |
| (5) Desmodur DA | 215 | Trimerisiertes Hexamethylendiisocyanat, hydrophilisiert, ca. 19.5 % NCO | |

C) Applikation und Prüfung der reaktiven Klebstoffdispersionen

Verwendete Klebstoffdispersionen:

| | |
|---|---|
| Jagotex KEM 2010<br><br>Ernst Jäger GmbH D-Düsseldorf | Vinylacetat-(Meth)acrylatdispersion, mit Hydroxylgruppen im Polymer und im Schutzkolloid, 55 % Feststoffe, Kontaktkleber<br>mit Aktivierungstemperatur 60 - 80 °C. Mit Ammoniak neutralisiert. |
| Jagotex KEM 4008<br><br>Ernst Jäger GmbH D-Düsseldorf | Acrylat-copolymer, 48 % Feststoff, haftklebrig, Tg - 45 °C; mit Hydroxylgruppen im Polymer und im Schutzkolloid. |
| Dispercoll U 54<br><br>Bayer AG, D-Leverkusen | PUR-Dispersion, aliphatisches Isocyanat, 50 % Feststoff, mit primären und sekundären Aminogruppen. |

Herstellung der Klebstoffdispersionen. Allgemeine Vorschrift:

Es wurde mit dem Dissolver ein reaktiver Dispersionsklebstoff mit den angegebenen Polyisocyanaten wie folgt hergestellt:

| | Gewichtsteile | Gewichtsteile |
|---|---|---|
| (1) Klebstoffdispersion, ca. 50 % Festoff | 100 | pro 100 Polymer |
| (2) Suspension von desaktivierten Polyisocyanat, ca. 35 %-ig | 16 | ca. 11.2 |
| (3) Metatin Katalysator 715; Basis Dibutyl-zinnalkylmercaptid (Acima AG, CH-Buchs), 10 %-ig in Diethylenglykol-dimethylether | 1<br>$\overline{117}$ | ca. 0.2 |

Die Klebstoffmischungen wurden mit einer Spiralrakel auf die Klebeflächen von Buchenholzprüflingen aufgebracht, dann gemäss den Lagerungen A - C behandelt, dann geprüft wie angegeben. Das Auftragsgewicht betrug nach der Trocknung etwa 100 g/m$^2$.

Beispiel 8 bis 12

Vernetzungsversuche mit Klebstoffen basierend auf KEM 2010 (neutralisiert) und verschiedenen Suspensionen von Polyisocyanaten

| | Vergleichs-Beispiel 8 | Vergleichs-beispiel 9 | Beispiel 10 | Beispiel 11 | Beispiel 12 |
|---|---|---|---|---|---|
| Dispersions-Klebstoff mit SDSI-Suspension (Bem. 1) | Ohne SDSI | Desmodur DA (Bem. 2) | IPDI-T Susp. nach Beispiel 1 | MDI Susp. nach Beispiel 2 | TODI Susp. nach Beispiel 3 |
| Lagerung A: 30 Min. / 120 °C Wärmestandfestigkeit °C | 85 | > 150 | > 150 | > 150 | > 150 |
| Wasserlagerung | - | - | - | + | + |
| Lagerung B: nur Normalbedingungen Wärmestandfestigkeit °C | 55 | > 130 | 55 | 55 | 55 |
| Wasserlagerung | - | - | * | * | * |
| Lagerung C: 1 Monat offen, fügen, dann 30 Min./120 °C, Wärmestandfestigkeit °C Wasserlagerung | 55 - | keine Kontakt-verklebung | > 150 +/- | > 150 + | > 150 + |
| Lagerung D: 1 Monat flüssig bei Normalbed. dann Lagerung A. Wärmestandfestigkeit °C | * | 85 | * | > 150 | * |
| Wasserlagerung | * | - | * | + | * |

* nicht geprüft

Bem. 1: SDSI ca. 11.2 T, pro 100 T. festes Polymer
Bem. 2: 13 T. Desmodur DA pro 100 T. festes Polymer

Beispiele 13 bis 16

Vernetzungsversuche mit Klebstoffen basierend auf KEM 2010 (neutralisiert) und verschiedenen Suspensionen von Polyisocyanaten

|  | Beispiel 13 | Beispiel 14 | Beispiel 15 | Beispiel 16 |
|---|---|---|---|---|
| Dispersions-Klebstoff mit SDSI-Suspension (Bem. 1) | TDI-U Susp. nach Beispiel 4 | TDIxEG Susp. nach Beispiel 5 | TDIxEG Susp. nach Beispiel 5 Einseitiger Auftrag | TDIxBDO Susp. nach Beispiel 6 |
|  |  |  |  |  |
| Lagerung A: 30 Min./ 120 °C Wärmestandfestigkeit °C | > 150 | >150 | > 150 | > 150 |
| Wasserlagerung | + | + | + | + |
| Lagerung B: nur Normalbedingungen Wärmestandfestigkeit °C Wasserlagerung | 55 * | 50 * | * | * |
| Lagerung C: 1 Monat offen, fügen, dann 30 Min./120°C, Wärmestandfestigkeit °C | > 150 | > 150 | > 150 | > 150 |
| Wasserlagerung | + | + | + | + |
| Lagerung D: 1 Monat flüssig bei Normalbed. dann Lagerung A. Wärmestandfestigkeit °C | > 150 | * | * | * |
| Wasserlagerung | + | * | * | * |

* nicht geprüft

Bem. 1: SDSI ca. 11.2 T. pro 100 T. festes Polymer

Beispiele 17 bis 21:

Vernetzungsversuche mit Klebstoffen basierend auf Polyurethandispersion Dispercoll U 54 und verschiedenen Suspensionen von Polyisocyanaten

|  | Vergleichs-Beispiel 17 | Vergleichs-Beispiel 18 | Beispiel 19 | Beispiel 20 | Beispiel 21 |
|---|---|---|---|---|---|
| Dispersions-Klebstoff mit SDSI-Suspension | Ohne SDSI | Desmodur DA (Bem. 2) | IPDI-T Susp. nach Beispiel 1 | TDI-U Susp. nach Beispiel 4 | TDIxEG Susp. nach Beispiel 5 |
| (Bem. 1) |  |  |  |  |  |
| Lagerung A: 30 Min. / 120 °C Wärmestandfestigkeit °C | 120 | > 150 | > 150 | > 150 | > 150 |
| Wasserlagerung | +/- | + | + | + | + |

(fortgesetzt)

| | Vergleichs-Beispiel 17 | Vergleichs-Beispiel 18 | Beispiel 19 | Beispiel 20 | Beispiel 21 |
|---|---|---|---|---|---|
| Dispersions-Klebstoff mit SDSI-Suspension | Ohne SDSI | Desmodur DA (Bem. 2) | IPDI-T Susp. nach Beispiel 1 | TDI-U Susp. nach Beispiel 4 | TDIxEG Susp. nach Beispiel 5 |
| (Bem. 1) | | | | | |
| Lagerung B: nur Normalbedingungen | 100 | > 150 | * | * | * |
| Wärmestandfestigkeit °C | +/- | + | * | * | * |
| Wasserlagerung | | | | | |
| Lagerung C: 1 Monat offen, fügen, dann | | | | | |
| 30 Min./120 °C, Wärmestandfestigkeit °C | 120 | keine Kontakt-verklebung | > 150 | > 150 | > 150 |
| Wasserlagerung | +/- | | + | + | + |

* nicht geprüft

Bem. 1: SDSI ca. 11.2 T. pro 100 T. festes Polymer
Bem. 2: 13 T. Desmodur DA pro 100 T. festes Polymer

Beispiele 22 bis 24:

Herstellen eines thermoreaktiven Klebevlieses

Die Klebstoffdispersionen wurden mit Spiralrakel auf Spinnvliese aus Polyethylenterephtalat (Lutradur 7225, Flächengewicht 25 g/m2, Freudenberg KG, D-Weinheim) aufgetragen. Die Vliese wurden im frischem Zustand von der Unterlage getrennt und senkrecht hängend bei Normalbedingungen getrocknet.

Nach 10 tägiger Lagerdauer wurden die trockenen Vliese zwischen zwei Buchenhölzern von 5 mm Dicke unter einem mechanischem Druck von 2 kp/cm2 während 30 Minuten auf 120 °C erhitzt (Pressverklebung). Der Verbund wurde anschliessend während 24 Stunden drucklos bei Normalbedingungen gelagert. Folgende Eigenschaften wurden an den Prüflingen bestimmt:

| | Beispiel 22 | Beispiel 23 | Beispiel 24 |
|---|---|---|---|
| Klebstoff nach Beispiel mit Polymer SDSI Kurzbezeichnung | 13 KEM 2010 TDI-U | 13 KEM 2010 TDI-U | 16 KEM 2010 TDIxBDO |
| Auftragsgewicht, trocken; g/m2 | 88 | 25 | 34 |
| Wärmestandfestigkeit der Klebefugen °C | > 150 | > 150 | > 150 |

Beispiel 25

Beispiel 22 wurde analog wiederholt, wobei auf Spinnvliese verzichtet wurde. Es entstand eine komplett trägerfreie, feste Klebeschicht, die bei Prüfung auf Wärmestandfestigkeit die zu Beispiel 22 analogen Werte zeigte.

Beispiel 26

Verkleben von glasfaserverstärkten Polyesterprüflingen

Auf Prüflinge mit den Dimensionen 100x25x3 mm$^3$ wurde die reaktive Klebstoffdispersion nach Beispiel 14 appliziert, Trockengewicht ca. 100 g/m$^2$. Nach Verflüchtigung des Wassers wurden die Prüflinge 3 Tage bei Normalbedingungen gelagert. Die beschichteten Flächen wurden auf 80 °C (das heisst knapp über dem Erweichungspunkt des Polymers) erwärmt und eine einfach überlappende Pressverklebung, Klebefläche 200 mm$^2$, erzeugt. Sofort wurde die Temperatur auf 120 °C erhöht und 30 Minuten gehalten.. Bei dieser Temperatur erfolgt die Vernetzung. Anschliessend lagern während 24 Stunden bei Normalbedingungen.

Es wurden bestimmt:

| | |
|---|---|
| Zugscherfestigkeit (100 mm pro Minute Zuggeschwindigkeit) | 2.21 MPa |
| Wärmestandfestigkeit | > 150 °C |

Beispiel 27

Eine Klebstoffzusammensetzung wurde analog Beispiel 13 hergestellt und die wässrige Dispersion bei Raumtemperatur aufgetragen. Das Entfernen des Wassers erfolgte durch Verdunsten bei Raumtemperatur und/oder Eindringen in die Unterlage. Die feste Schicht wurde über einen Zeitraum von 5 Monaten bei +2°C offen liegen gelassen . Die Klebeflächen wurden danach zusammengefügt und unter Klammerdruck während 0.5 Std. auf 120°C erhitzt, wobei die Vernetzungsreaktion ausgelöst wurde. Abschliessend erfolgte eine 24 stündige Lagerung bei Raumtemperatur bei Raumtemperatur. Die Resultate hinsichtlich Wärmestandfestigkeit und Wasserlagerung entsprachen denen in Beispiel 13.

Beispiel 28

Herstellung, Applikation und Lagerung erfolgte analog Beispiel 26. Danach wurde das aus Unterlage und fester Klebstoffschicht bestehende Gesamtsystem dreimal auf 80°C über den Erweichungspunkt des Polymeren erwärmt und wieder abgekühlt. Anschliessend erfolgte das Aushärten durch halbstündiges Erwärmen auf 120°C. Die Resultate hinsichtlich Wärmestandfestigkeit und Wasserlagerung entsprachen denen in Beispiel 13.

Beispiel 29

Eine wässrige Dispersion, die der Zusammensetzung aus Beispiel 13 entspach, wurde mittels Sprühtrocknung in ein festes weitgehend wasserfreies Pulver überführt. Die Applikation, Lagerung und Vernetzung erfolgte analog Lagerung C. Die Resultate hinsichtlich Wärmestandfestigkeit und Wasserlagerung entsprachen denen in Beispiel 13.

**Patentansprüche**

1. Verwendung einer im wesentlichen wässrigen Dispersion, die wenigstens ein festes nur an der Oberflächedesaktiviertes Polyisocyanat und wenigstens ein mit Isocyanat reaktives Polymer enthält, zur Herstellung von getrockneten, lagerstabilen, latent-reaktiven Schichten oder Pulvern.

2. Verwendung der Dispersion gemäss Anspruch 1, dadurch gekennzeichnet, dass die desaktivierten Polyisocyanate Reaktionstemperaturen im Bereich von 30 °C bis 180 °C aufweisen.

3. Verwendung der Dispersion nach Anspruch 2, dadurch gekennzeichnet, dass die Reaktionstemperaturen zwischen 40 °C und 150 °C sind.

4. Verwendung der Dispersion gemäss Anspruch 1 und 2, dadurch gekennzeichnet, dass die desaktivierten Polyisocyanate Schmelzpunkte im Bereich von 40 °C bis 150 °C aufweisen.

5. Verwendung der Dispersion gemäss einem der vorangehenden Ansprüche dadurch gekennzeichnet, dass das mit Isocyanat reaktive Polymer ein mit aliphatischen, cycloaliphatischen, aromatischen Monoaminen oder Aminoalkoholen modifiziertes Copolymerisat aus Glycidylmethacrylat oder Allylglycidylether mit olefinisch ungesättigten Monomeren ist.

6. Verwendung der Dispersion gemäss einem der vorangehenden Ansprüche, dadurch gekennzeichnet, dass das Verhältnis zwischen den Isocyanatgruppen des oberflächendesaktivierten Polyisocyanats und den Hydroxyl- und Aminogruppen des Polymeren im weitgehend wasserfreien, festen Zustand im Bereich von 0.1 und 1.5 liegt.

7. Verwendung der Dispersion gemäss einem der vorangehenden Ansprüche, dadurch gekennzeichnet, dass sie zusätzlich inerte und funktionelle Zusätze enthält.

8. Verwendung der Dispersion nach Anspruch 7, dadurch gekennzeichnet, dass die Zusätze ausgewählt sind aus der Gruppe enthaltend hydroxy- oder aminofunktionelle pulverförmige oder flüssige nieder- bis hochmolekularen Verbindungen, Stabilisatoren, Netzmittel, Korrosionsschutzmittel, Flammschutzmittel, Verdickungsmittel, Füllstoffe und Pigmente.

9. Verwendung der Dispersion gemäss einem der vorangehenden Ansprüche, dadurch gekennzeichnet, dass das mit Isocyanaten reaktive Polymer eine anionische oder kationische wässrige Dispersion aus Polyurethan oder Polyharnstoff ist, welches Carboxyl-, Hydroxyl-, primäre oder sekundäre Aminogruppen trägt.

10. Verwendung einer Mischung enthaltend ein Reaktionsprodukt aus 2 Mol 1-Methyl-2,4-phenylen-diisocyanat und 1 Mol 1,4-Butandiol oder 1,2-Ethandiol zur Herstellung lagerstabiler Schichten oder Pulvern mit einer Vernetzungstemperatur unter 90 °C.

11. Verfahren zum Herstellen von lagerstabilen, latentreaktiven Schichten, bei dem mindestens ein im wesentlichen in Wasser suspendiertes, nur an der Oberfläche desaktiviertes Polyisocyanat mit einer im wesentlichen wässrigen Dispersion oder Lösung aus wenigstens einem gegenüber Isocyanaten reaktiven Polymer gemischt wird und diese Dispersion auf ein Substrat in vorbestimmbarer Schichtstärke aufgetragen wird, dadurch gekennzeichnet, dass das Wasser bei einer Temperatur unterhalb der Reaktionstemperatur des Isocyanates entfernt wird, so dass die dadurch erhaltenen im wesentlichen trockenen und festen Schichten bei Temperaturen unterhalb der Reaktionstemperatur von Polyisocyanat und Polymeren lagerstabil und latent-reaktiv sind.

12. Verfahren zum Herstellen von lagerstabilen, latentreaktiven Pulvern, bei dem wenigstens ein im wesentlichen in Wasser dispergiertes, nur an der Oberfläche desaktiviertes Polyisocyanat mit einer im wesentlichen wässrigen Dispersion oder Lösung aus wenigstens einem gegenüber Isocyanaten reaktiven Polymer gemischt wird, dadurch gekennzeichnet, dass das Wasser anschliessend unterhalb der Reaktionstemperatur des Isocyanates entfernt wird und die dadurch erhaltenen im wesentlichen trockenen und festen Massen zu Pulvern bei Temperaturen unterhalb der Reaktionstemperaturen des Polyisocyanates weiterverarbeitet und insbesondere auf Substrate aufgebracht werden, so dass die so erhaltenen Pulver bei Temperaturen unterhalb der Reaktionstemperatur von Polyisocyanat und Polymeren lagerstabil und latent-reaktiv bleiben.

13. Verfahren nach einem der Ansprüche 11 oder 12, dadurch gekennzeichnet, dass nach einer vorbestimmbaren zeitspanne das Polyisocyanat mit dem Polymeren bei Temperaturen oberhalb der Reaktionstemperatur des Polyisocyanates vernetzt und aushärtet.

14. Verfahren nach einem der Ansprüche 11 bis 13, dadurch gekennzeichnet, dass das Wasser bei Temperaturen oberhalb der Erweichungstemperatur des Polymeren entfernt wird.

15. Verfahren nach einem der Ansprüche 11 bis 14, dadurch gekennzeichnet, dass das die Schicht oder Pulver tragende Substrat in weiteren Verfahrensschritten bearbeitet wird.

16. Verfahren nach Anspruch 15, dadurch gekennzeichnet, dass, das Substrat in eine vorbestimmte Form gebracht wird.

17. Verfahren nach einem der Ansprüche 11, 13, 14 oder 15, dadurch gekennzeichnet, dass die im wesentlichen feste Schicht auf einem ersten Substrat getrocknet wird, danach von diesem Substrat getrennt wird und nach einer vorbestimmbaren Zeitspanne auf ein anderes Substrat aufgebracht und vernetzt wird.

18. Verfahren nach Anspruch 15, dadurch gekennzeichnet, dass die Bearbeitung mehrmaliges Erwärmen auf Temperaturen oberhalb der Erweichungstemperatur des Polymeren und unterhalb der Reaktionstemperatur des Polyisocyanates umfasst.

19. Verfahren nach Anspruch 12, dadurch gekennzeichnet, dass das Pulver durch Sprühtrocknen erhalten wird.

**20.** Schicht oder Pulver enthaltend wenigstens ein nur an der Oberflächedesaktiviertes Polyisocyanat und wenigstens ein mit Isocyanat reaktives Polymer, dadurch gekennzeichnet, dass die Schicht aus einer wässrigen Dispersion erzeugt ist, welche wenigstens ein nur an der Oberflächedesaktiviertes Polyisocyanat, wenigstens ein mit Isocyanat reaktives Polymer und Wasser enthält, und dass die weitgehend wasserfreie Schicht oder das weitgehend wasserfreie Pulver trocken und fest vorliegt und im trockenen und festen Zustand lagerstabil und latent reaktiv ist.

**21.** Schicht oder Pulver gemäss Anspruch 20 dadurch gekennzeichnet, dass das mit Isocyanat reaktive Polymer ein filmbildendes Polymerisat ist.

**22.** Schicht oder Pulver gemäss einem der Ansprüche 20 oder 21 dadurch gekennzeichnet, dass das oberflächendesaktivierte Polyisocyanat mit dem isocyanatreaktiven Polymer nach Ablauf einer vorbestimmbaren Lagerzeit bei Temperaturen über der Reaktionstemperatur der Polyisocyanate vernetzt und aushärtet.

**23.** Schicht oder Pulver gemäss einem der Ansprüche 20 bis 22 dadurch gekennzeichnet, dass die Schicht oder das Pulver bei +2°C mindestens 6 Monate lagerstabil und reaktionsfähig ist.

**24.** Verwendung der Schicht oder des Pulvers gemäss einem der Ansprüche 20 bis 23 als Klebstoff.

**Claims**

**1.** The use of an essentially aqueous dispersion which contains at least one solid polyisocyanate deactivated only at the surface and at least one polymer reactive with isocyanate, for manufacturing dried, storage-stable, latent-reactive layers or powders.

**2.** The use of the dispersion according to claim 1, characterised in that the deactivated polyisocyanates have reaction temperatures in the region of 30 °C to 180 °C.

**3.** The use of the dispersion according to claim 2, characterised in that the reaction temperatures are between 40 °C to 150 °C.

**4.** The use of the dispersion according to claim 1 and 2, characterised in that deactivated polyisocyanates have melting points in the region of 40 °C to 150°C.

**5.** The use of a dispersion according to one of the preceding claims, characterised in that the polymer reactive with isocyanate is a copolymerisate of glycidyl methacrylate or allyl-glycidyl ether with olefinic unsaturated monomers, said copolymerisate being modified with aliphatic, cycloaliphatic, aromatic monoamines or amino alcohols.

**6.** The use of the dispersion according to one of the preceding claims, characterised in that the ratio between the isocyanate groups of the surface-deactivated polyisocyanate and the hydroxyl and amino groups of the polymer in the largely water-free, solid condition lies in the region of 0.1 and 1.5.

**7.** The use of a dispersion according to one of the preceding claims, characterised in that it additionally contains inert and functional additives.

**8.** The use of the dispersion according to claim 7, characterised in that the additives are selected from the group containing hydroxy- or amino- functional powder-like or liquid, low to high molecular compounds, stabilisers, surface-active agents, corrosion protection agents, flame-protection agents, thickening agents, fillers and pigments.

**9.** The use of the dispersion according to one of the preceding claims, characterised in that the polymer reactive with isocyanates is an anionic or cationic aqueous dispersion of polyurethane or polyurea, which carries carboxyl-, hydroxyl-, primary or secondary amino groups.

**10.** The use of a mixture containing a reaction product of 2 moles of 1-methyl-2,4-phenylene-diisocyanate and 1 mole of 1,4-butandiol or 1,2-ethandiol for manufacturing storage-stable layers or powders with a cross-linking temperature below 90°c.

**11.** A method for manufacturing storage-stable, latent-reactive layers, with which at least one polyisocyanate deactivated only at the surface and suspended essentially in water is mixed with an essentially aqueous dispersion or solution of at least one polymer reactive with respect to isocyanates and this dispersion is deposited onto a substrate in a predeterminable layer thickness, characterised in that the water is removed at a temperature below the reaction temperature of the isocyanate, so that the essentially dry and solid layers obtained by way of this are storage-stable and latent-reactive at temperatures below the reaction temperature of the polyisocyanate and polymer.

12. A method for manufacturing storage-stable, latent-reactive powders, with which at least one polyisocyanate deactivated only at the surface and dispersed essentially in water is mixed with an essentially aqueous dispersion or solution of at least one polymer reactive with respect to isocyanates, characterised in that the water subsequently is removed below the reaction temperature of the isocyanate and the essentially dry and solid masses obtained by way of this are processed further to powders at temperatures below the reaction temperatures of the polyisocyanate and in particular deposited onto substrates so that the thus obtained powder at temperatures below the reaction temperature of the polyisocyanate and polymer remain storage-stable and latent-reactive.

13. A method according to one of the claims 11 or 12, characterised in that after a predeterminable time period the polyisocyanate with the polymer at temperatures above the reaction temperature of the polyisocyanate cross-links and cures.

14. A method according to one of claims 11 to 13, characterised in that the water is removed at temperatures above the softening temperature of the polymer.

15. A method according to one of the claims 11 to 14, characterised in that the substrate carrying the layer or powder is processed in further method steps.

16. A method according to claim 15, characterised in that the substrate is brought into a predetermined form.

17. A method according to one of the claims 11, 13, 14 or 15, characterised in that the essentially solid layer is dried on a first substrate, thereafter is separated from this substrate and after a predeterminable time duration is deposited onto another substrate and cross-linked.

18. A method according to claim 15, characterised in that the processing comprises a heating several times to temperatures above the softening temperature of the polymer and below the reaction temperature of the polyisocyanate.

19. A method according to claim 12, characterised in that the powder is obtained by spray-drying.

20. A layer or powder containing at least one polyisocyanate deactivated only on the surface and at least one polymer reactive with polyisocyanate, characterised in that the layer is produced from an aqueous dispersion which contains at least one surface-deactivated polyisocyanate, at least one polymer reactive with isocyanate, and water, and that the largely water-free layer or the largely water-free powder is present dry and solid and in the dry and solid condition is storage-stable and latent-reactive.

21. A layer or powder according to claim 20, characterised in that the polymer reactive with isocyanate is a film-forming polymerisate.

22. A layer or powder according to one of the claims 20 or 21, characterised in that the surface-deactivated polyisocyanate with the isocyanate-reactive polymer after completion of a predeterminable storage time at temperatures above the reaction temperature of the polyisocyanates cross-links and hardens.

23. A layer or powder according to one of the claims 20 to 22, characterised in that the layer or the powder at +2°C for at least 6 months is storage-stable and reaction-capable.

24. The use of the layer or powder according to one of the claims 20 to 23 as an adhesive.

# EP 0 922 720 B1

**Revendications**

1. Utilisation d'une dispersion pour l'essentiel aqueuse, qui contient au moins un polyisocyanate solide, qui n'est désactivé qu'en surface, et au moins un polymère réactif vis à vis des isocyanates, pour préparer des couches ou des poudres séchées, stables au stockage et à réactivité latente.

2. Utilisation de la dispersion selon la revendication 1, caractérisée en ce que les polyisocyanates désactivés ont des températures de réaction comprises dans la plage de 30 à 180°C.

3. Utilisation de la dispersion selon la revendication 2, caractérisée en ce que les températures de réaction sont comprises entre 40 et 150°C.

4. Utilisation de la dispersion selon la revendication 1 ou 2, caractérisée en ce que les polyisocyanates désactivés ont des points de fusion compris dans la plage de 40 à 150°C.

5. Utilisation de la dispersion selon l'une des revendications précédentes, caractérisée en ce que le polymère réactif vis à vis des isocyanates est un copolymère de méthacrylate de glycidyle ou d'allylglycidyléther avec des monomères à insaturation oléfinique, modifié par des monoamines ou des aminoalcools aliphatiques, cycloaliphatiques, aromatiques.

6. Utilisation de la dispersion selon l'une des revendications précédentes, caractérisée en ce que le rapport entre les groupes isocyanate du polyisocyanate désactivé en surface et les groupes hydroxyle et amino du polymère, à l'état solide pour ainsi dire anhydre, est compris dans la plage de 0,1 à 1,5.

7. Utilisation de la dispersion selon l'une des revendications précédentes, caractérisée en ce qu'elle contient en outre des additifs inertes et fonctionnels.

8. Utilisation de la dispersion selon la revendication 7, caractérisée en ce que les additifs sont choisis dans l'ensemble contenant des composés hydroxylés ou aminés, pulvérulents ou liquides, à masse moléculaire faible à élevée, des stabilisants, des agents mouillants, des agents anti-corrosion, des agents d'ignifugation, des agents épaississants, des matières de charge et des pigments.

9. Utilisation de la dispersion selon l'une des revendications précédentes, caractérisée en ce que le polymère réactif vis à vis des isocyanates est une dispersion aqueuse, anionique ou cationique, de polyuréthanne ou de polyurée, qui porte des groupes carboxyle, hydroxyle ou amino primaires ou secondaires.

10. Utilisation d'un mélange contenant un produit de la réaction de deux moles de l-méthyl-2,4-phénylène diisocyanate et d'une mole de 1,4-butanediol ou de 1,2-éthanediol, pour préparer des couches ou poudres stables au stockage, ayant une température de réticulation inférieure à 90°C.

11. Procédé de fabrication de couches stables au stockage et à réactivité latente, dans lequel on mélange au moins un polyisocyanate pour l'essentiel en suspension dans de l'eau, qui n'est désactivé qu'en surface, avec une dispersion ou solution pour l'essentiel aqueuse, constituée d'au moins un polymère réactif vis à vis des isocyanates, et on applique cette dispersion sur un substrat sur une épaisseur de couche pouvant être prédéterminée, caractérisé en ce que l'eau est éliminée à une température inférieure à la température de réaction de l'isocyanate, de façon que les couches obtenues de cette façon, pour l'essentiel sèches et solides, soient stables au stockage, avec une réactivité latente, à des températures inférieures à la température de la réaction du polyisocyanate et du polymère.

12. Procédé de fabrication de poudres stables au stockage et à réactivité latente, dans lequel on mélange au moins un polyisocyanate pour l'essentiel dispersé dans de l'eau, désactivé seulement en surface, avec une dispersion ou une solution pour ainsi dire aqueuse constituée d'au moins un polymère réactif vis à vis des isocyanates, caractérisé en ce l'eau est ensuite éliminée en dessous de la température de réaction de l'isocyanate, et en ce que les masses obtenues de cette manière, pour ainsi dire sèches et solides, sont soumises à une post-transformation en des poudres à des températures inférieures aux températures de réaction du polyisocyanate, et sont en particulier appliquées sur des substrats, de façon que les poudres ainsi obtenues restent stables au stockage et à réactivité latente à des températures inférieures à la température de réaction du polyisocyanate et du polymère.

**13.** Procédé selon la revendication 11 ou 12, caractérisé en ce que, après un laps de temps pouvant être prédéfini, le polyisocyanate est réticulé avec le polymère à des températures supérieures à la température de réaction du polyisocyanate, et durci.

**14.** Procédé selon l'une des revendications 11 à 13, caractérisé en ce que l'eau est éliminée à des températures supérieures à la température de ramollissement du polymère.

**15.** Procédé selon l'une des revendications 11 à 14, caractérisé en ce que le substrat portant la couche ou la poudre subit un traitement dans des étapes supplémentaires.

**16.** Procédé selon la revendication 15, caractérisé en ce que le substrat est mis sous une forme prédéfinie.

**17.** Procédé selon l'une des revendications 11, 13, 14 et 15, caractérisé en ce que la couche essentiellement solide est séchée sur un premier substrat, puis est séparée de ce substrat et, après un laps de temps pouvant être prédéfini, est appliquée sur un autre substrat et est réticulée.

**18.** Procédé selon la revendication 15, caractérisé en ce que le traitement englobe plusieurs opérations de chauffage à des températures supérieures à la température de ramollissement du polymère et inférieures à la température de réaction du polyisocyanate.

**19.** Procédé selon la revendication 12, caractérisé en ce que la poudre est obtenue par séchage par atomisation.

**20.** Couche ou poudre contenant au moins un polyisocyanate qui n'est désactivé qu'en surface et au moins un polymère réactif vis à vis des isocyanates, caractérisée en ce que la couche est produite à partir d'une dispersion aqueuse qui contient au moins un polyisocyanate désactivé en surface, au moins un polymère réactif vis à vis des isocyanates, et de l'eau, et en ce que la couche essentiellement anhydre ou la poudre essentiellement anhydre se présente sous forme sèche et solide, et à l'état sec et solide est stable au stockage et présente une réactivité latente.

**21.** Couche ou poudre selon la revendication 20, caractérisée en ce que le polymère réactif vis à vis des isocyanates est un produit de polymèrisation filmogène.

**22.** Couche ou poudre selon la revendication 20 ou 21, caractérisée en ce que le polyisocyanate désactivé en surface est réticulé avec le polymère réactif vis à vis des isocyanates après écoulement d'un temps de stockage pouvant être prédéfini, à des températures supérieures à la température de réaction des polyisocyanates, et est durci.

**23.** Couche ou poudre selon l'une des revendications 20 à 22, caractérisée en ce qu'elle est, à +2°C, stable au stockage et réactive pendant au moins 6 mois.

**24.** Utilisation, en tant qu'adhésif, de la couche ou de la poudre selon l'une des revendications 20 à 23.